# EUROPÄISCHE PATENTSCHRIFT

(11) **EP 3 326 462 B1**
(45) Veröffentlichungstag und Bekanntmachung des Hinweises auf die Patenterteilung: **24.02.2021**
(21) Anmeldenummer: 17401115.5
(22) Anmeldetag: 16.11.2017
(51) Int. Cl.: A01M 7/00

(54) **VERTEILERGESTÄNGE FÜR EINE LANDWIRTSCHAFTLICHE VERTEILMASCHINE**
DISTRIBUTING ROD FOR AN AGRICULTURAL DISTRIBUTION MACHINE
TIGE DE RÉPARTITION POUR UNE MACHINE DE RÉPARTITION AGRICOLE

(30) Priorität: 28.11.2016 DE 102016122857
(43) Veröffentlichungstag der Anmeldung: 30.05.2018
(73) Patentinhaber: Amazonen-Werke H. Dreyer GmbH & Co. KG, 49205 Hasbergen (DE)
(72) Erfinder: Oberheide, Friedrich, 49143 Bissendorf (DE); Kowollik, Daniel, 47443 Moers (DE)

(56) Entgegenhaltungen:
- EP-A1- 0 429 934
- EP-A2- 1 661 444
- DE-A1-102015 101 493

## Beschreibung

Die Erfindung betrifft ein Verteilergestänge für eine landwirtschaftliche Verteilmaschine gemäß dem Oberbegriff des Patentanspruchs 1 und eine landwirtschaftliche Verteilmaschine nach dem Oberbegriff des Patentanspruchs 11.

Verteilergestänge kommen beispielsweise bei Pflanzenschutzspritzen zum Einsatz, um Flüssigdünger und/oder Pflanzenschutzmittel effektiv auf landwirtschaftliche Nutzflächen ausbringen zu können. Der Flüssigdünger und/oder das Pflanzenschutzmittel werden dabei einer Vielzahl von Spritzdüsen zugeleitet, welche an dem Verteilergestänge angeordnet sind und den Flüssigdünger und/oder das Pflanzenschutzmittel auf die Pflanzen und/oder den Boden verteilen.

Damit der Flüssigdünger und/oder das Pflanzenschutzmittel unter möglichst geringem Zeiteinsatz auf eine möglichst große Fläche ausgebracht werden kann, werden üblicherweise Verteilergestänge mit mehreren zueinander verschwenkbaren Gestängeabschnitten eingesetzt, welche in einer Arbeitsstellung auf eine Gestängebreite von bis zu 40m und mehr ausgeschwenkt und zum Transport auf eine zulässige Transportbreite, von max. 3 m, eingeschwenkt werden können. Die Druckschrift EP 1 525 784 B1 beschreibt ein derartiges verschwenkbares Verteilergestänge.

Einige bekannte Verteilergestänge weisen als Außenausleger-Sicherungen ausgebildete Ausweichgelenke auf, welche das jeweilige Verteilergestänge vor Beschädigungen schützen, wenn die beiden außenliegenden Gestängeabschnitte auf feste Hindernisse, wie beispielsweise einen Baum oder eine Gebäudestruktur, treffen. Die hierbei eingesetzten Gelenkanordnungen sind zwischen zwei Gestängeabschnitten angeordnet und dazu eingerichtet, eine Schwenkbewegung des außenliegenden Gestängeabschnitts um eine aufrechte Achse zu erlauben, damit der außenliegende Gestängeabschnitt beim Auftreffen auf das Hindernis nach vorne oder nach hinten ausschwenken kann. Auf diese Weise können Beschädigungen des Verteilergestänges bei einer Kollision mit einem Hindernis vermieden werden.

Damit das Ausbringen des Flüssigdüngers und/oder des Pflanzenschutzmittels ohne Verzögerung fortgeführt werden kann, sind moderne Verteilergestänge außerdem mit Rückstelleinrichtungen ausgestattet, welche jeweils einem Ausschwenken eines außenliegenden Gestängeabschnitts aus der Arbeitsstellung entgegenwirken. Solche Verteilergestänge, deren Rückstelleinrichtungen jeweils einen Hydraulikzylinder aufweisen, sind beispielsweise aus DE10 2015 101 493 A1, EP 3 053 436 A1 und EP 3 053 437 A1 bekannt.

Die bekannten Lösungen haben jedoch den Nachteil, dass die Krafteinleitung von dem verwendeten Rückstellzylinder in den außenliegenden Gestängeabschnitt zu einer mehrachsigen Beanspruchung des außenliegenden Gestängeabschnitts führt. Da die Gestängeabschnitte jedoch üblicherweise als Strebengerüste ausgebildet sind, führt die mehrachsige Beanspruchung zu einem erheblichen Beschädigungsrisiko, sodass entweder ein erhöhtes Ausfallrisiko in Kauf genommen werden muss oder die außenliegenden Gestängeabschnitte robuster ausgeführt werden müssen, wodurch der Material- und Fertigungsaufwand steigt.

Der Erfindung liegt somit die Aufgabe zugrunde, die Beanspruchung eines außenliegenden Gestängeabschnitts eines Verteilergestänges durch den Rückstellzylinder einer Rückstelleinrichtung zu reduzieren.

Die Aufgabe wird gelöst durch ein Verteilergestänge der eingangs genannten Art, wobei die Rückstelleinrichtung einen Rückstellzylinder aufweist, dessen Längsachse im Wesentlichen fluchtend zu der Mittelachse einer Kraftaufnahmestrebe des außenliegenden Gestängeabschnitts verläuft, welche sich in der Arbeitsstellung im Wesentlichen quer zur Fahrtrichtung erstreckt, wobei die Gelenkanordnung unterhalb der Rückstelleinrichtung angeordnet ist.

Die Erfindung macht sich die Erkenntnis zunutze, dass die Krafteinleitung von dem Rückstellzylinder in den außenliegenden Gestängeabschnitt durch die fluchtende Anordnung der Längsachse des Rückstellzylinders und der Mittelachse der Kraftaufnahmestrebe geradlinig verläuft. Auf diese Weise wird eine mehrachsige Beanspruchung des außenliegenden Gestängeabschnitts vermieden oder zumindest erheblich reduziert. Die Gelenkanordnung ermöglicht somit das Ausweichen des außenliegenden Gestängeabschnitts durch eine Schwenkbewegung nach vorne oder nach hinten, ohne dass es zu einer übermäßigen Beanspruchung des außenliegenden Gestängeabschnitts kommt, wodurch das Beschädigungsrisiko verringert wird und der außenliegende Gestängeabschnitt materialsparend und kostengünstig ausgeführt werden kann. Dadurch, dass der Rückstellzylinder beim Ausschwenken des außenliegenden Gestängeabschnitts aus der Arbeitsstellung eine Rückstellkraft erzeugt, wirkt die Rückstelleinrichtung einem Ausschwenken des außenliegenden Gestängeabschnitts aus einer Arbeitsstellung entgegen, sodass der außenliegende Gestängeabschnitt nach der Kollision mit einem Hindernis selbsttätig wieder in die Arbeitsstellung verbracht wird. Der Rückstellzylinder kann beispielsweise als Federelement wirken und/oder als Hydraulikzylinder ausgebildet sein. Die Kraftaufnahmestrebe des außenliegenden Gestängeabschnitts ist eine Gestängestrebe des Verteilergestänges, welche beispielsweise teilweise oder vollständig als eckige oder runde Hohlprofilstrebe oder als Profilstrebe mit einem U-förmigen oder H-förmigen Querschnitt ausgebildet sein kann. Unter einer aufrechten Achse ist im Sinne der Erfindung eine Achse zu verstehen, welche im Wesentlichen vertikal verläuft oder gegenüber einer Vertikalen bis zu 45 Grad, bevorzugt bis zu 30 Grad, besonders bevorzugt bis zu 20 Grad geneigt ist.

In einer bevorzugten Ausführungsform des erfindungsgemäßen Verteilergestänges ist der Rückstellzylinder zumindest abschnittsweise innerhalb der Kraftaufnahmestrebe des außenliegenden Gestängeabschnitts angeordnet. Vorzugsweise weist die Kraftaufnahmestrebe eine Ausnehmung auf, innerhalb welcher der Rückstellzylinder angeordnet ist. Der Rückstellzylinder weist vorzugsweise eine entlang der Längsachse des Rückstellzylinders bewegbare Kolbenstange auf, wobei an dem freien Ende der Kolbenstange ein Befestigungsglied angeordnet ist, welches mit dem Gestängeabschnitt, welcher benachbart zu dem außenliegenden Gestängeabschnitt angeordnet ist, verbunden ist. Wenn die Gelenkanordnung mehrteilig ausgebildet ist, sind vorzugsweise sämtliche Teile der Gelenkanordnung unterhalb der Rückstelleinrichtung angeordnet. Auf diese Weise wird vermieden, dass die während des Ausschwenks des außenliegenden Gestängeabschnitts aus der Arbeitsstellung entstehenden Kräfte in die Gelenkanordnung eingeleitet werden, wodurch eine zusätzliche Beanspruchung der Gelenkanordnung bei einer Kollision des außenliegenden Gestängeabschnitts mit einem Hindernis vermieden wird. Vorzugsweise weist das Befestigungsglied einen Ringabschnitt mit einer Ausnehmung auf, wobei sich durch die Ausnehmung ein Befestigungselement, wie etwa ein Stift oder ein Bolzen, erstreckt, welches die Befestigung an dem benachbarten Gestängeabschnitt umsetzt.

Das erfindungsgemäße Verteilergestänge wird ferner dadurch vorteilhaft weitergebildet, dass der außenliegende Gestängeabschnitt einen Obergurt und einen in vertikaler Richtung von dem Obergurt beabstandeten Untergurt aufweist, wobei der Obergurt die Kraftaufnahmestrebe umfasst oder als Kraftaufnahmestrebe ausgebildet ist. Alternativ kann der Untergurt die Kraftaufnahmestrebe umfassen oder als Kraftaufnahmestrebe ausgebildet sein. Der Obergurt und der Untergurt des außenliegenden Gestängeabschnitts sind als Gestängestreben ausgebildet, wobei der Obergurt und der Untergurt parallel oder geneigt zueinander verlaufen können. Insbesondere ist zwischen dem Obergurt und dem Untergurt eine zusätzliche Diagonalstrebe zur Versteifung des außenliegenden Gestängeabschnitts angeordnet.

In einer besonders bevorzugten Ausführungsform des erfindungsgemäßen Verteilergestänges sind der Untergurt und der Obergurt mittels einer Verbindungsstrebe miteinander verbunden, wobei eines von mehreren Gelenkelementen der Gelenkanordnung an der Verbindungsstrebe angeordnet und vorzugsweise befestigt ist. Die Verbindungsstrebe weist vorzugsweise eine aufrechte Mittelachse auf, wobei der Rückstellzylinder insbesondere in dem Verbindungsbereich zwischen dem Obergurt und der Verbindungsstrebe angeordnet ist. Vorzugsweise ist das zwischen dem Obergurt und dem Untergurt des außenliegenden Gestängeabschnitts sowie an der Verbindungsstrebe angeordnete Gelenkelement mit der Diagonalstrebe verbunden, welche zwischen dem Untergurt und dem Obergurt des außenliegenden Gestängeabschnitts angeordnet ist.

Bevorzugt ist ferner ein erfindungsgemäßes Verteilergestänge, bei welchem das an der Verbindungsstrebe angeordnete Gelenkelement der Gelenkanordnung eine geschlossene Führungslasche aufweist, welche dazu eingerichtet ist, einen oder mehrere Führungsstifte während einer Schwenkbewegung des außenliegenden Gestängeabschnitts zu führen. Bei einem Ausschwenken des außenliegenden Gestängeabschnitts wird die geschlossene Führungslasche gegenüber dem einen oder den mehreren Führungsstiften verdreht, wobei die Führung des einen oder der mehreren Führungsstifte durch die Laschenkontur umgesetzt wird. Durch die geschlossene Ausgestaltung der Führungslasche wird sichergestellt, dass der eine oder die mehreren Führungsstifte nicht aus der Führungslasche herausspringen können.

In einer Weiterbildung des erfindungsgemäßen Verteilergestänges ist die Gelenkanordnung dazu eingerichtet, eine Schwenkbewegung des außenliegenden Gestängeabschnitts um eine zumindest annähernd horizontal verlaufende Achse und/oder um eine Achse, welche innerhalb einer in Fahrtrichtung aufgespannten aufrechten Ebene liegt, zu erlauben, wobei die Gelenkanordnung ein Langloch aufweist, in welchem ein Führungselement der Gelenkanordnung während der Schwenkbewegung geführt wird. Die Gelenkanordnung ermöglicht somit das Ausweichen des außenliegenden Gestängeabschnitts durch eine Schwenkbewegung nach oben, wodurch das Beschädigungsrisiko beim Aufsetzen auf ein Hindernis, beispielsweise beim Bewegen des Verteilergestänges entlang eines Hanges, erheblich verringert wird. Die Schwerkraft wirkt beim Ausschwenken des außenliegenden Gestängeabschnitts aus der Arbeitsstellung nach oben als Rückstellkraft, sodass einem Ausschwenken des außenliegenden Gestängeabschnitts aus einer Arbeitsstellung nach oben entgegengewirkt wird. Auf diese Weise wird der außenliegende Gestängeabschnitt nach dem Ausweichen nach oben durch die Schwerkraft selbsttätig wieder in die Arbeitsstellung verbracht. Unter einer zumindest annähernd horizontal verlaufenden Achse ist im Sinne der Erfindung eine Achse zu verstehen, welche im Wesentlichen horizontal verläuft oder gegenüber einer Horizontalen bis zu 15 Grad, bevorzugt bis zu 10 Grad, besonders bevorzugt bis zu 5 Grad geneigt ist. Das Langloch ist vorzugsweise unterhalb der geschlossenen Führungslasche angeordnet.

In einer besonders bevorzugten Ausführungsform des erfindungsgemäßen Verteilergestänges erstreckt sich die Längsachse des Langlochs, welche in Richtung der Längserstreckung des Langlochs verläuft, in der Arbeitsstellung des Verteilergestänges im Wesentlichen quer zur Fahrtrichtung. Vorzugsweise kann das Führungselement durch die Relativbewegung zu dem Langloch innerhalb des Langlochs zwei Endpositionen einnehmen, wobei sich das Führungselement in der Arbeitsstellung in der ersten Endposition und bei einer maximalen Auslenkung des außenliegenden Gestängeabschnitts nach oben in der zweiten Endposition innerhalb des Langlochs befindet. Vorzugsweise befindet sich das Führungselement in der ersten Endposition an dem, dem außenliegenden Gestängeabschnitt zugewandten Ende des Langlochs, wobei sich das Führungselement in der zweiten Endposition an dem, dem außenliegenden Gestängeabschnitt abgewandten Ende des Langlochs befindet.

In einer Weiterbildung des erfindungsgemäßen Verteilergestänges ist das Langloch in dem außenliegenden Gestängeabschnitt angeordnet. Vorzugsweise verläuft die Längsachse des Langlochs geneigt gegenüber der Längsachse des Rückstellzylinder und/oder der Mittelachse der Kraftaufnahmestrebe. Insbesondere erstreckt sich die Längsachse des Langlochs in der Arbeitsstellung im Wesentlichen in horizontaler Richtung und in dem nach oben ausgelenkten Zustand geneigt gegenüber einer Horizontalen.

Ferner ist ein erfindungsgemäßes Verteilergestänge bevorzugt, bei welchem das Langloch in dem Untergurt des außenliegenden Gestängeabschnitts oder benachbart zu dem Untergurt des außenliegenden Gestängeabschnitts angeordnet ist. Insbesondere kann das Langloch in einem sich von dem Untergurt des außenliegenden Gestängeabschnitts erstreckenden Fortsatz ausgebildet sein. Vorzugsweise verläuft die Längsachse des Langlochs parallel oder fluchtend zu der Mittelachse des Untergurts des außenliegenden Gestängeabschnitts.

In einer weiteren bevorzugten Ausführungsform des erfindungsgemäßen Verteilergestänges umfasst das in dem Langloch geführte Führungselement ein Kugelgelenk. Durch das Kugelgelenk kann das Führungselement beim Auslenken des außenliegenden Gestängeabschnitts nach oben und/oder beim Auslenken des außenliegenden Gestängeabschnitts nach vorne oder hinten weiterhin ohne Verkippung in dem Langloch gehalten werden. Auf diese Weise wird ein Verkeilen des Führungselements innerhalb des Langlochs vermieden.

Vorzugsweise umfasst das Verteilergestänge zwei außenliegende Gestängeabschnitte, wobei die beiden außenliegenden Gestängeabschnitte jeweils mit einer Gelenkanordnung angelenkt sind. Beide Gelenkanordnungen sind dabei jeweils dazu eingerichtet, eine Schwenkbewegung des jeweiligen außenliegenden Gestängeabschnitts zu erlauben. Insbesondere sind die zwei Gelenkanordnungen sowie die zwei außenliegenden Gestängeabschnitte nach einer der vorstehend beschriebenen Ausführungsformen ausgebildet.

Die der Erfindung zugrundeliegende Aufgabe wird ferner gelöst durch eine landwirtschaftliche Verteilmaschine der eingangs genannten Art, wobei das Verteilergestänge der erfindungsgemäßen landwirtschaftlichen Verteilmaschine nach einer der vorstehend beschriebenen Ausführungsformen ausgebildet ist. Hinsichtlich der Vorteile und Modifikationen der erfindungsgemäßen landwirtschaftlichen Verteilmaschine wird auf die Vorteile und Modifikationen des erfindungsgemäßen Verteilergestänges verwiesen.

Weitere Einzelheiten der Erfindung sind der Figurenbeschreibung und den Zeichnungen zu entnehmen. Es zeigen
- Fig. 1: ein Ausführungsbeispiel des erfindungsgemäßen Verteilergestänges in einer Frontalansicht;
- Fig. 2: einen außenliegenden Gestängeabschnitt des Verteilergestänges aus der Fig. 1 in einer perspektivischen Darstellung;
- Fig. 3: zwei benachbarte Gestängeabschnitte des Verteilergestänges aus der Fig. 1 in der Arbeitsstellung;
- Fig. 4: zwei benachbarte Gestängeabschnitte des Verteilergestänges aus der Fig. 1 mit einem nach hinten verschwenkten außenliegenden Gestängeabschnitt;
- Fig. 5: zwei benachbarte Gestängeabschnitte des Verteilergestänges aus der Fig. 1 in der Arbeitsstellung; und
- Fig. 6: zwei benachbarte Gestängeabschnitte des Verteilergestänges aus der Fig. 1 mit einem nach oben verschwenkten außenliegenden Gestängeabschnitt.

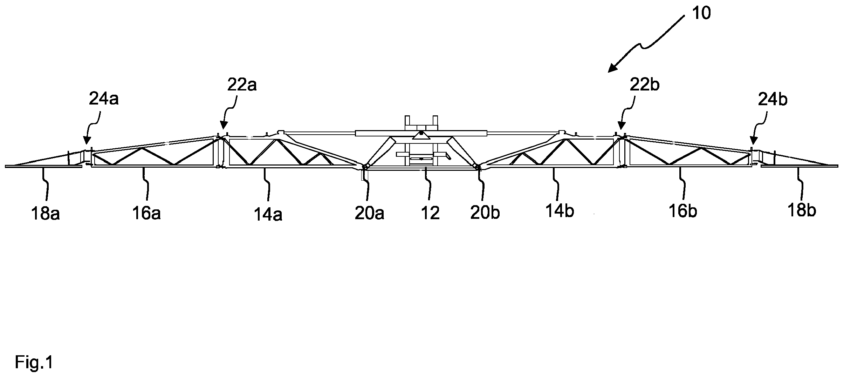

Die Fig. 1 zeigt ein Verteilergestänge 10 einer als Pflanzenschutzspritze ausgebildeten landwirtschaftlichen Verteilmaschine.

Das Verteilergestänge 10 weist einen zentralen Gestängeabschnitt 12 auf, welcher dazu eingerichtet ist, an einem Maschinenrahmen der landwirtschaftlichen Verteilmaschine befestigt zu werden. An dem zentralen Gestängeabschnitt 12 sind die Gestängeabschnitte 14a, 14b seitlich angelenkt. Zwischen dem zentralen Gestängeabschnitt 12 und den Gestängeabschnitten 14a, 14b ist jeweils ein Gelenk 20a, 20b angeordnet, wobei die Gelenke 20a, 20b ein Verschwenken der Gestängeabschnitte 14a, 14b um eine aufrechte Achse erlauben. An den Gestängeabschnitten 14a, 14b sind die Gestängeabschnitte 16a, 16b seitlich angelenkt. Zwischen den Gestängeabschnitten 14a, 14b und den Gestängeabschnitten 16a, 16b ist jeweils ein Gelenk 22a, 22b angeordnet, wobei die Gelenke 22a, 22b ein Verschwenken der Gestängeabschnitte 16a, 16b um eine aufrechte Achse erlauben.

An den Gestängeabschnitten 16a, 16b sind die außenliegenden Gestängeabschnitte 18a, 18b seitlich angelenkt. Zwischen den Gestängeabschnitten 16a, 16b und den außenliegenden Gestängeabschnitten 18a, 18b ist jeweils eine Gelenkanordnung 24a, 24b angeordnet, wobei die Gelenkanordnungen 24a, 24b ein Verschwenken der außenliegenden Gestängeabschnitte 18a, 18b sowohl um eine aufrechte Achse nach vorne und nach hinten als auch um eine annähernd horizontal verlaufende Achse nach oben erlauben.

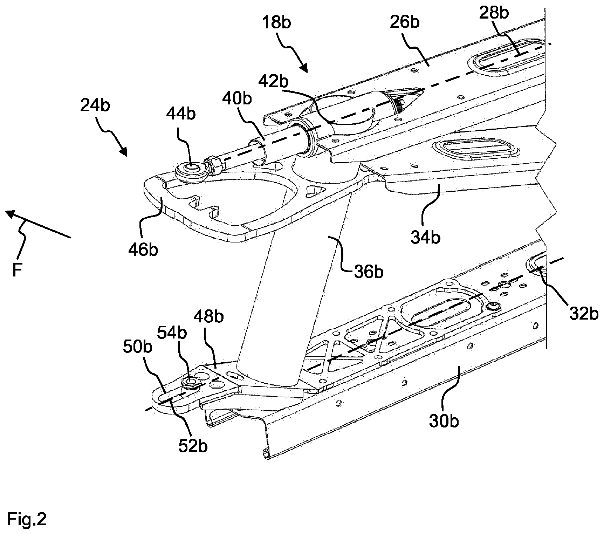

Die Fig. 2 zeigt die Ausbildung des außenliegenden Gestängeabschnitts 18b, wobei der außenliegende Gestängeabschnitt 18a aus der Fig. 1 spiegelsymmetrisch zu dem außenliegenden Gestängeabschnitt 18b ausgebildet ist. Der außenliegende Gestängeabschnitt 18b weist einen Obergurt 26b und einen in vertikaler Richtung von dem Obergurt 26b beabstandeten Untergurt 30b auf, wobei der Obergurt 26b als Kraftaufnahmestrebe ausgebildet ist. Zwischen dem Obergurt 26b und dem Untergurt 30b ist eine Diagonalstrebe 34b zur Versteifung des außenliegenden Gestängeabschnitts 18b angeordnet. Ferner sind der Untergurt 30b und der Obergurt 26b mittels einer Verbindungsstrebe 36b miteinander verbunden, wobei ein Gelenkelement der Gelenkanordnung 24b an der Verbindungsstrebe 36b angeordnet und befestigt ist. Das an der Verbindungsstrebe 36b angeordnete Gelenkelement der Gelenkanordnung 24b weist eine geschlossene Führungslasche 46b auf, welche dazu eingerichtet ist, zwei Führungsstifte 56b während der Schwenkbewegung des außenliegenden Gestängeabschnitts 18b zu führen. Die Führungslasche 46b ist außerdem mit der Diagonalstrebe 34b verbunden.

Ein als Hydraulikzylinder ausgebildeter Rückstellzylinder 40b ist abschnittsweise innerhalb der Kraftaufnahmestrebe 26b des außenliegenden Gestängeabschnitts 18b angeordnet, wobei die Längsachse 42b des Rückstellzylinder 40b im Wesentlichen fluchtend zu der Mittelachse 28b der Kraftaufnahmestrebe 26b des außenliegenden Gestängeabschnitts 18b verläuft. Die Kraftaufnahmestrebe 26b erstreckt sich in der Arbeitsstellung im Wesentlichen quer zur Fahrtrichtung F.

Der Rückstellzylinder 40b weist an seinem freien Ende ein Befestigungsglied 44b auf, wobei das Befestigungsglied 44b einen Ringabschnitt mit einer Ausnehmung umfasst, wobei sich durch die Ausnehmung ein Befestigungselement 54b erstrecken kann, welches die Befestigung an dem benachbarten Gestängeabschnitt 16b umsetzt.

Die Gelenkanordnung 24b weist ein Langloch 50b auf, welches in dem außenliegenden Gestängeabschnitt 18b angeordnet ist. Vorliegend ist das Langloch 50b benachbart zu dem Untergurt 30b des außenliegenden Gestängeabschnitts 18b angeordnet und innerhalb eines Fortsatzes 48b ausgebildet. Die Längsachse 52b des Langlochs 50b erstreckt sich in der Arbeitsstellung des Verteilergestänges 10 im Wesentlichen quer zur Fahrtrichtung F. In dem Langloch 50b wird ein Führungselement 54b der Gelenkanordnung 24b während der Schwenkbewegung des außenliegenden Gestängeabschnitts 18b geführt. Das Führungselement 54b umfasst ein Kugelgelenk. Die Längsachse 52b des Langlochs 50b verläuft parallel zu der Mittelachse 32b des Untergurts 30b des außenliegenden Gestängeabschnitts 18b.

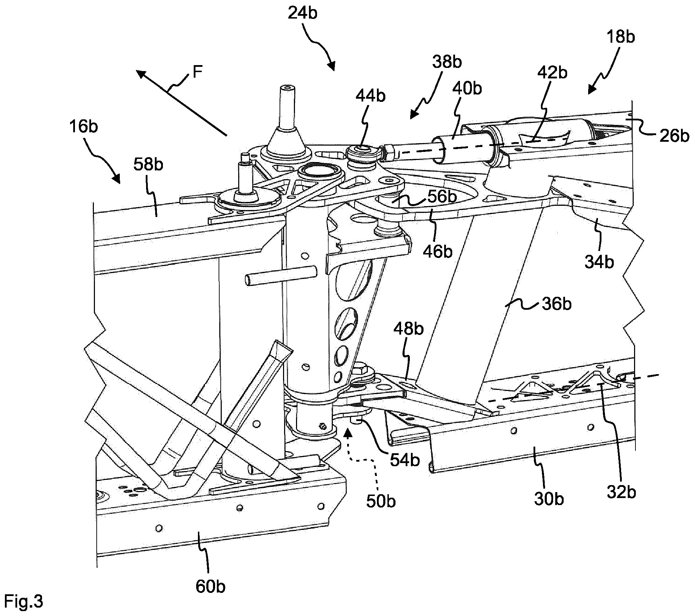

Die Fig. 3 zeigt die den Rückstellzylinder 40b umfassende Rückstelleinrichtung 38b. Die Rückstelleinrichtung 38b wirkt einem Ausschwenken des außenliegenden Gestängeabschnitts 18b um eine aufrechte Achse aus einer Arbeitsstellung entgegen. Der Rückstellzylinder 40b erzeugt beim Ausschwenken des außenliegenden Gestängeabschnitts 18b um eine aufrechte Achse aus der Arbeitsstellung eine Rückstellkraft. Sämtliche Teile der Gelenkanordnung 24b sind unterhalb der Rückstelleinrichtung 38b angeordnet.

Der Gestängeabschnitt 16b weist ebenfalls einen Obergurt 58b und einen in vertikaler Richtung von dem Obergurt 58b beabstandeten Untergurt 60b auf. Der Gestängeabschnitt 16b ist über den Rückstellzylinder 40b, die zwei Führungsstifte 56b und das Führungselement 54b mit dem außenliegenden Gestängeabschnitt 18b verbunden. Die zwei Führungsstifte 56b sind in der geschlossenen Führungslasche 46b angeordnet. Das Führungselement 54b ist innerhalb des Langlochs 50b angeordnet.

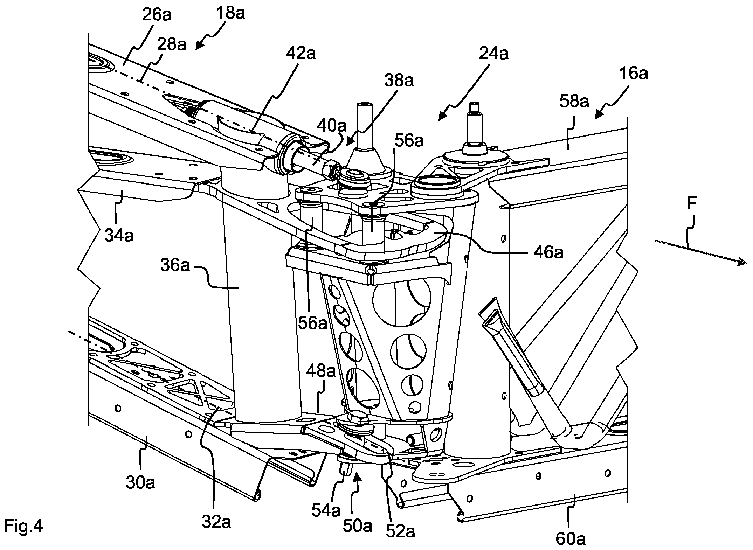

Die Fig. 4 zeigt einen nach hinten ausgelenkten außenliegenden Gestängeabschnitt 18a. Der dieser Auslenkung zugrundeliegende Schwenkvorgang kann beispielsweise durch eine Kollision des außenliegenden Gestängeabschnitts 18a mit einem feststehenden Hindernis hervorgerufen worden sein. Durch den Schwenkvorgang wurde die Führungslasche 46a relativ zu den zwei Führungsstiften 56a verdreht. Durch das Kugelgelenk des Führungselements 54a wird ferner ein Verkanten des Führungselements 54a innerhalb des Langlochs 50a vermieden.

In dem dargestellten ausgelenkten Zustand des außenliegenden Gestängeabschnitts 18a wirkt eine von dem Rückstellzylinder 40a erzeugte Rückstellkraft auf den außenliegenden Gestängeabschnitt 18a, welche den außenliegenden Gestängeabschnitt 18a dazu veranlasst, selbsttätig eine Schwenkbewegung zurück in die Arbeitsstellung auszuführen.

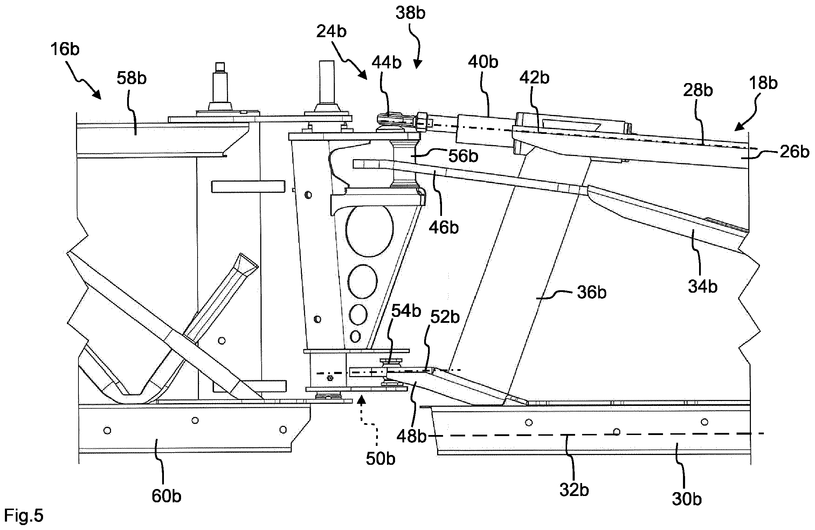

Die Fig. 5 zeigt einen außenliegenden Gestängeabschnitt 18b in der Arbeitsstellung. Grundsätzlich kann das Führungselement 54b durch eine Relativbewegung zu dem Langloch 50b innerhalb des Langlochs 50b zwei Endpositionen einnehmen, wobei sich das Führungselement 54b in der dargestellten Arbeitsstellung in der ersten Endposition des Langlochs 50b befindet. Das Führungselement 54b befindet sich in der ersten Endposition an dem, dem außenliegenden Gestängeabschnitt 18b zugewandten Ende des Langlochs 50b. Die Längsachse 52b des Langlochs 50b erstreckt sich in der Arbeitsstellung im Wesentlichen in horizontaler Richtung. Durch die auf den außenliegenden Gestängeabschnitt 18b wirkende Schwerkraft wird das Führungselement 54b in der ersten Endposition innerhalb des Langlochs 50b gehalten.

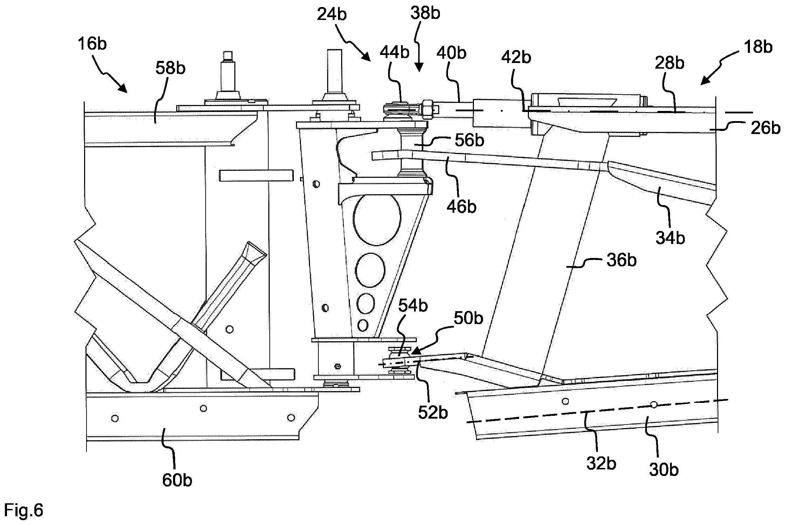

Die Fig. 6 zeigt einen nach oben ausgelenkten außenliegenden Gestängeabschnitt 18b. Der dieser Auslenkung zugrundeliegende Schwenkvorgang kann beispielsweise durch ein Aufsetzen auf ein Hindernis, beispielsweise beim Bewegen des Verteilergestänges 10 entlang eines Hanges, verursacht werden. Bei der dargestellten maximalen Auslenkung des außenliegenden Gestängeabschnitts 18b nach oben befindet sich das Führungselement 54b in der zweiten Endposition innerhalb des Langlochs 50b. Das Führungselement 54b befindet sich in der zweiten Endposition an dem, dem außenliegenden Gestängeabschnitt 18b abgewandten Ende des Langlochs 50b. Die Längsachse 52b des Langlochs 50b erstreckt sich in dem nach oben ausgelenkten Zustand des außenliegenden Gestängeabschnitts 18b geneigt gegenüber einer Horizontalen. Die Schwerkraft wirkt beim Ausschwenken des außenliegenden Gestängeabschnitts 18b aus der Arbeitsstellung nach oben als Rückstellkraft, sodass einem Ausschwenken des außenliegenden Gestängeabschnitts 18b aus der Arbeitsstellung nach oben entgegengewirkt wird. Aufgrund der Schwerkraft wird der außenliegende Gestängeabschnitt 18b nach Passieren des Hindernisses wieder selbsttätig in die Arbeitsstellung verbracht.

### Bezugszeichenliste

- 10: Verteilergestänge
- 12: Gestängeabschnitt
- 14a, 14b: Gestängeabschnitte
- 16a, 16b: Gestängeabschnitte
- 18a, 18b: Gestängeabschnitte
- 20a, 20b: Gelenke
- 22a, 22b: Gelenke
- 24a, 24b: Gelenkanordnungen
- 26a, 26b: Kraftaufnahmestreben und Obergurte
- 28a, 28b: Mittelachsen der Kraftaufnahmestreben
- 30a, 30b: Untergurte
- 32a, 32b: Mittelachsen der Untergurte
- 34a, 34b: Diagonalstreben
- 36a, 36b: Verbindungsstreben
- 38a, 38b: Rückstelleinrichtungen
- 40a, 40b: Rückstellzylinder
- 42a, 42b: Längsachsen der Rückstellzylinder
- 44a, 44b: Befestigungsglieder
- 46a, 46b: Führungslaschen
- 48a, 48b: Fortsätze
- 50a, 50b: Langlöcher
- 52a, 52b: Längsachsen der Langlöcher
- 54a, 54b: Führungselemente
- 56a, 56b: Führungsstifte
- 58a, 58b: Obergurte
- 60a, 60b: Untergurte

- F: Fahrtrichtung

## Patentansprüche

1. Verteilergestänge (10) für eine landwirtschaftliche Verteilmaschine, mit
- mehreren zueinander verschwenkbaren Gestängeabschnitten (12, 14a, 14b, 16a, 16b, 18a, 18b);
- einer Gelenkanordnung (24a, 24b), welche zwischen zwei Gestängeabschnitten (16a, 16b, 18a, 18b) angeordnet und dazu eingerichtet ist, eine Schwenkbewegung eines außenliegenden Gestängeabschnitts (18a, 18b) um eine aufrechte Achse zu erlauben; und
- einer Rückstelleinrichtung (38a, 38b), welche einem Ausschwenken des außenliegenden Gestängeabschnitts (18a, 18b) aus einer Arbeitsstellung entgegenwirkt;
**dadurch gekennzeichnet, dass** die Rückstelleinrichtung (38a, 38b) einen Rückstellzylinder (40a, 40b) aufweist, dessen Längsachse (42a, 42b) im Wesentlichen fluchtend zu der Mittelachse (28a, 28b) einer Kraftaufnahmestrebe (26a, 26b) des außenliegenden Gestängeabschnitts (18a, 18b) verläuft, welche sich in der Arbeitsstellung im Wesentlichen quer zur Fahrtrichtung (F) erstreckt; und
dass
die Gelenkanordnung (24a, 24b) unterhalb der Rückstelleinrichtung (38a, 38b) angeordnet ist.

2. Verteilergestänge (10) nach Anspruch 1,
**dadurch gekennzeichnet, dass** der Rückstellzylinder (40a, 40b) zumindest abschnittsweise innerhalb der Kraftaufnahmestrebe (26a, 26b) des außenliegenden Gestängeabschnitts (18a, 18b) angeordnet ist.

3. Verteilergestänge (10) nach Anspruch 1 oder 2,
**dadurch gekennzeichnet, dass** der außenliegende Gestängeabschnitt einen Obergurt (26a, 26b) und einen in vertikaler Richtung von dem Obergurt (26a, 26b) beabstandeten Untergurt (30a, 30b) aufweist, wobei der Obergurt (26a, 26b) die Kraftaufnahmestrebe umfasst oder als Kraftaufnahmestrebe ausgebildet ist.

4. Verteilergestänge (10) nach Anspruch 3,
**dadurch gekennzeichnet, dass** der Untergurt (30a, 30b) und der Obergurt (26a, 26b) mittels einer Verbindungsstrebe (36a, 36b) miteinander verbunden sind, wobei eines von mehreren Gelenkelementen der Gelenkanordnung (24a, 24b) an der Verbindungsstrebe (36a, 36b) angeordnet und vorzugsweise befestigt ist.

5. Verteilergestänge (10) nach Anspruch 4,
**dadurch gekennzeichnet, dass** das an der Verbindungsstrebe (36a, 36b) angeordnete Gelenkelement der Gelenkanordnung (24a, 24b) eine geschlossene Führungslasche (46a, 46b) aufweist, welche dazu eingerichtet ist, einen oder mehrere Führungsstifte (56a, 56b) während einer Schwenkbewegung des außenliegenden Gestängeabschnitts (18a, 18b) zu führen.

6. Verteilergestänge (10) nach einem der vorstehenden Ansprüche,
**dadurch gekennzeichnet, dass** die Gelenkanordnung (24a, 24b) dazu eingerichtet ist, eine Schwenkbewegung des außenliegenden Gestängeabschnitts (18a, 18b) um eine zumindest annähernd horizontal verlaufende Achse und/oder um eine Achse, welche innerhalb einer in Fahrtrichtung (F) aufgespannten aufrechten Ebene liegt, zu erlauben und ein Langloch (50a, 50b) aufweist, in welchem ein Führungselement (54a, 54b) der Gelenkanordnung (24a, 24b) während der Schwenkbewegung geführt wird.

7. Verteilergestänge (10) nach Anspruch 6,
**dadurch gekennzeichnet, dass** die Längsachse (52a, 52b) des Langlochs (50a, 50b) sich in der Arbeitsstellung des Verteilergestänges (10) im Wesentlichen quer zur Fahrtrichtung (F) erstreckt.

8. Verteilergestänge (10) nach Anspruch 7,
**dadurch gekennzeichnet, dass** das Langloch (50a, 50b) in dem außenliegenden Gestängeabschnitt angeordnet ist.

9. Verteilergestänge (10) nach Anspruch 7 oder 8,
**dadurch gekennzeichnet, dass** das Langloch (50a, 50b) in dem Untergurt (30a, 30b) des außenliegenden Gestängeabschnitts (18a, 18b) oder benachbart zu dem Untergurt (30a, 30b) des außenliegenden Gestängeabschnitts (18a, 18b) angeordnet ist.

10. Verteilergestänge (10) nach einem der Ansprüche 7 bis 9,
**dadurch gekennzeichnet, dass** das in dem Langloch (50a, 50b) geführte Führungselement (54a, 54b) ein Kugelgelenk umfasst.

11. Landwirtschaftliche Verteilmaschine, insbesondere Pflanzenschutzspritze, mit
- einem Verteilergestänge (10);
**dadurch gekennzeichnet, dass** das Verteilergestänge (10) nach einem der vorstehenden Ansprüche ausgebildet ist.

## Claims

1. Distributor boom (10) for an agricultural distribution machine, having
- a plurality of boom portions (12, 14a, 14b, 16a, 16b, 18a, 18b) that are pivotable relative to one another;
- a joint arrangement (24a, 24b) that is arranged between two boom portions (16a, 16b, 18a, 18b) and is set up to allow a pivoting movement of an external boom portion (18a, 18b) about an upright axis; and
- a restoring device (38a, 38b) that counteracts any pivoting of the external boom portion (18a, 18b) out of a working position;
**characterized in that** the restoring device (38a, 38b) has a restoring cylinder (40a, 40b), the longitudinal axis (42a, 42b) of which extends substantially flush with the central axis (28a, 28b) of a force absorption strut (26a, 26b) of the external boom portion (18a, 18b), said strut extending substantially transversely to the direction of travel (F) in the working position; and
**in that** the joint arrangement (24a, 24b) is arranged beneath the restoring device (38a, 38b).

2. Distributor boom (10) according to Claim 1, **characterized in that** the restoring cylinder (40a, 40b) is arranged at least partially within the force absorption strut (26a, 26b) of the external boom portion (18a, 18b).

3. Distributor boom (10) according to Claim 1 or 2, **characterized in that** the external boom portion has an upper chord (26a, 26b) and a lower chord (30a, 30b) spaced apart from the upper chord (26a, 26b) in a vertical direction, wherein the upper chord (26a, 26b) comprises the force absorption strut or is configured as the force absorption strut.

4. Distributor boom (10) according to Claim 3, **characterized in that** the lower chord (30a, 30b) and the upper chord (26a, 26b) are connected together by means of a connecting strut (36a, 36b), wherein one of a plurality of joint elements of the joint arrangement (24a, 24b) is arranged on and preferably fastened to the connecting strut (36a, 36b).

5. Distributor boom (10) according to Claim 4, **characterized in that** the joint element, arranged on the connecting strut (36a, 36b), of the joint arrangement (24a, 24b) has a closed guide tab (46a, 46b) which is set up to guide one or more guide pins (56a, 56b) during a pivoting movement of the external boom portion (18a, 18b) .

6. Distributor boom (10) according to one of the preceding claims,
**characterized in that** the joint arrangement (24a, 24b) is set up to allow a pivoting movement of the external boom portion (18a, 18b) about an axis extending approximately horizontally and/or about an axis that lies within a upright plane defined in the direction of travel (F), and has a slot (50a, 50b) in which a guide element (54a, 54b) of the joint arrangement (24a, 24b) is guided during the pivoting movement.

7. Distributor boom (10) according to Claim 6,
**characterized in that** the longitudinal axis (52a, 52b) of the slot (50a, 50b) extends substantially transversely to the direction of travel (F) in the working position of the distributor boom (10).

8. Distributor boom (10) according to Claim 7,
**characterized in that** the slot (50a, 50b) is arranged in the external boom portion.

9. Distributor boom (10) according to Claim 7 or 8,
**characterized in that** the slot (50a, 50b) is arranged in the lower chord (30a, 30b) of the external boom portion (18a, 18b) or adjacent to the lower chord (30a, 30b) of the external boom portion (18a, 18b).

10. Distributor boom (10) according to one of Claims 7 to 9,
**characterized in that** the guide element (54a, 54b) guided in the slot (50a, 50b) comprises a ball joint.

11. Agricultural distribution machine, in particular crop protection sprayer, having
- a distributor boom (10);
**characterized in that** the distributor boom (10) is configured according to one of the preceding claims.

## Revendications

1. Tringlerie de distributeur (10) pour une machine de distribution agricole, munie
- de plusieurs sections de tringlerie (12, 14a, 14b, 16a, 16b, 18a, 18b) aptes à pivoter les unes par rapport aux autres ;
- d'un agencement d'articulation (24a, 24b), qui est agencé entre deux sections de tringlerie (16a, 16b, 18a, 18b) et est conçu pour permettre un mouvement de pivotement d'une section de tringlerie extérieure (18a, 18b) autour d'un axe vertical ; et
- d'un appareil de rappel (38a, 38b), qui s'oppose à un pivotement vers l'extérieur de la section de tringlerie extérieure (18a, 18b) à partir d'une position de travail ;
**caractérisée en ce que** l'appareil de rappel (38a, 38b) comprend un cylindre de rappel (40a, 40b), dont l'axe longitudinal (42a, 42b) s'étend essentiellement en alignement avec l'axe central (28a, 28b) d'une entretoise d'absorption de force (26a, 26b) de la section de tringlerie extérieure (18a, 18b), qui s'étend dans la position de travail essentiellement perpendiculairement à la direction de déplacement (F) ; et
**en ce que** l'agencement d'articulation (24a, 24b) est agencé sous l'appareil de rappel (38a, 38b).

2. Tringlerie de distributeur (10) selon la revendication 1, **caractérisée en ce que** le cylindre de rappel (40a, 40b) est agencé au moins en sections à l'intérieur de l'entretoise d'absorption de force (26a, 26b) de la section de tringlerie extérieure (18a, 18b).

3. Tringlerie de distributeur (10) selon la revendication 1 ou 2, **caractérisée en ce que** la section de tringlerie extérieure comprend une semelle supérieure (26a, 26b) et une semelle inférieure (30a, 30b) espacée dans la direction verticale de la semelle supérieure (26a, 26b), la semelle supérieure (26a, 26b) comprenant l'entretoise d'absorption de force ou étant configurée sous la forme d'une entretoise d'absorption de force.

4. Tringlerie de distributeur (10) selon la revendication 3, **caractérisée en ce que** la semelle inférieure (30a, 30b) et la semelle supérieure (26a, 26b) sont reliées l'une avec l'autre au moyen d'une entretoise de liaison (36a, 36b), un élément parmi plusieurs éléments d'articulation de l'agencement d'articulation (24a, 24b) étant agencé et de préférence fixé sur l'entretoise de liaison (36a, 36b).

5. Tringlerie de distributeur (10) selon la revendication 4, **caractérisée en ce que** l'élément d'articulation de l'agencement d'articulation (24a, 24b) agencé sur l'entretoise de liaison (36a, 36b) comprend une bride de guidage fermée (46a, 46b), qui est conçue pour guider une ou plusieurs broches de guidage (56a, 56b) pendant un mouvement de pivotement de la section de tringlerie extérieure (18a, 18b).

6. Tringlerie de distributeur (10) selon l'une quelconque des revendications précédentes, **caractérisée en ce que** l'agencement d'articulation (24a, 24b) est conçu pour permettre un mouvement de pivotement de la section de tringlerie extérieure (18a, 18b) autour d'un axe s'étendant au moins approximativement à l'horizontale et/ou autour d'un axe qui est situé à l'intérieur d'un plan vertical sous-tendu dans la direction de déplacement (F), et comprend un trou longitudinal (50a, 50b), dans lequel un élément de guidage (54a, 54b) de l'agencement d'articulation (24a, 24b) est guidé pendant le mouvement de pivotement.

7. Tringlerie de distributeur (10) selon la revendication 6, **caractérisée en ce que** l'axe longitudinal (52a, 52b) du trou longitudinal (50a, 50b) s'étend dans la position de travail de la tringlerie de distributeur (10) essentiellement perpendiculairement à la direction de déplacement (F).

8. Tringlerie de distributeur (10) selon la revendication 7, **caractérisée en ce que** le trou longitudinal (50a, 50b) est agencé dans la section de tringlerie extérieure.

9. Tringlerie de distributeur (10) selon la revendication 7 ou 8, **caractérisée en ce que** le trou longitudinal (50a, 50b) est agencé dans la semelle inférieure (30a, 30b) de la section de tringlerie extérieure (18a, 18b) ou de manière adjacente à la semelle inférieure (30a, 30b) de la section de tringlerie extérieure (18a, 18b).

10. Tringlerie de distributeur (10) selon l'une quelconque des revendications 7 à 9, **caractérisée en ce que** l'élément de guidage (54a, 54b) guidé dans le trou longitudinal (50a, 50b) comprend une articulation sphérique.

11. Machine de distribution agricole, notamment pulvérisateur de protection des plantes, munie
- d'une tringlerie de distributeur (10) ;
**caractérisée en ce que** la tringlerie de distributeur (10) est configurée selon l'une quelconque des revendications précédentes.
